# EUROPEAN PATENT APPLICATION

(11) **EP 1 642 803 A1**
(43) Date of publication of application: **05.04.2006**
(21) Application number: 05019920.7
(22) Date of filing: 13.09.2005
(51) Int. Cl.: B62B 9/24, A47D 15/00

(54) **Seat with seat belt capable of holding baby with simple structure**

(30) Priority: 01.10.2004 JP 2004290041
(71) Applicant: Aprica Ikujikenkyukai Aprica Kassai Kabushikikaisha, Osaka-shi, Osaka 542-0082 (JP)
(72) Inventor: Kassai, Kenzou, Osaka-shi Osaka 542-0083 (JP); Ohnishi, Ichiro, Osaka-shi Osaka 542-0082 (JP)
(74) Representative: Hofer, Dorothea

(57) **Abstract**

A seat of a baby carriage (10) has a seat part (30) and a backrest part (32) continued from the seat part (30). The baby carriage (10) comprises a crotch belt (18) having one end fixed to the center of the seat part (30), a pair of shoulder belts (14a,14b) connected to the other end of the crotch belt (18) and having rear ends which pass through shoulder part through holes (35a,35b) provided at an upper part of the backrest part (32) and which are led to a rear side of the backrest part (32), and belt adjustment lock members (39a,39b) which are positioned on the rear side of the backrest part (32) so as to be close to the shoulder part through holes (35a,35b), receive the other ends of the pair of shoulder belts (14a,14b) so as to adjust their lengths, and prevent the pair of shoulder belts (14a,14b) from slipping out forward from the shoulder part through holes (35a,35b).

## Description

### BACKGROUND OF THE INVENTION

### 1. Field of the Invention

The present invention relates to a seat which is used in a baby carriage, a baby safety chair, a wheelchair and the like and more particularly, it relates to a seat having a seat belt which can surely hold a baby and the like.

### 2. Description of the Background Art

Conventionally, a seat used in a baby carriage is provided with a three-point seat belt having a crotch belt mounted on a seat part and right and left waist belts detachably mounted on the crotch belt. While the baby is little, since the baby hardly moves, there is no problem as to the above three-point seat belt. However, as the baby grows up, the baby starts to stand up and moves actively on the baby carriage. Since this is very dangerous, it is necessary to hold the babe safely on the baby carriage. Thus, it is proposed that a five-point seat belt of a child safety seat, for example is employed.

An example in which a seat having such a five-point seat belt is used in the baby carriage is disclosed in Japanese Utility Model Publication No. 5-15249, for example. According to this document, ends of two shoulder belts of the seat belt are mounted to a winding mechanism attached to the rear side of a backrest part and the baby is held by winding force of the winding mechanism.

The conventional seat having the five-point seat belt used in the baby carriage has the above constitution. The seat belt of the seat is forced in the winding direction all the time and the baby can be surely held by predetermined force. However, such firm fixing is not necessary in the baby carriage and since its constitution is complicated because of the winding mechanism, it is difficult to apply such a seat belt to a folding baby carriage.

### SUMMARY OF THE INVENTION

The present invention is made in view of the above problems and it is an object of the present invention to provide a seat having a seat belt which can surely hold a baby and the like with simple constitution.

According to the present invention, a seat having a seat part, and a backrest part continued from the seat part comprises a crotch belt having one end fixed to the center of the seat part, a pair of shoulder belts connected to the other end of the crotch belt and having rear ends which pass through shoulder part through holes provided at an upper part of the backrest part and which are led to a rear side of the backrest part, and a belt adjustment lock member which is positioned on the rear side of the backrest part so as to be close to the shoulder part through holes, receive the other ends of the pair of shoulder belts with their length adjustable, and prevent the pair of shoulder belts from slipping out forward from the shoulder part through holes.

The pair of shoulder belts is connected to the other end of the crotch belt and led to the rear side of the backrest part through the shoulder part through holes provided at the upper part of the backrest part and it is adjustable in length and prevented from slipping out forward from the shoulder part through holes by the belt adjustment lock member positioned on the rear side of the backrest part located close to the shoulder part through holes.

As a result, there can be provided the seat having the seat belt which can surely hold the baby and the like with a simple constitution.

Preferably, the belt adjustment lock member is mounted on an upper part of the rear side of the backrest part.

The belt adjustment lock members may be mounted on the upper part of the rear side of the backrest part by strings. The belt adjustment lock members may be connected only to the pair of shoulder belts.

### BRIEF DESCRIPTION OF THE DRAWINGS

Figs. 1A and 1B are views showing a baby carriage according to one embodiment of the present invention;
Fig. 2 is a view taken in the direction of arrow II in Fig. 1A;
Fig. 3 is a view showing a seat part and a backrest part of the baby carriage;
Fig. 4 is a view taken in the direction of arrow IV in Fig. 1B; and
Figs. 5A and 5B are schematic views showing a mounting state of a shoulder belt on a belt adjustment lock member.

### DESCRIPTION OF THE PREFERRED EMBODIMENTS

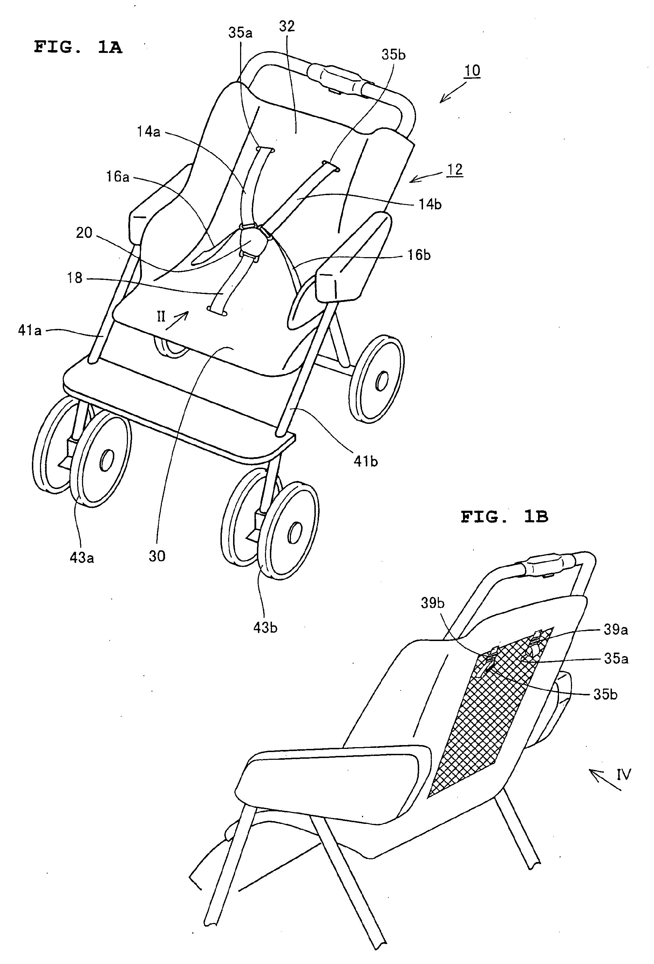

An embodiment of the present invention will be described with reference to the drawings hereinafter. Figs. 1A and 1B are perspective views showing a seat according to the present invention which is applied to a baby carriage. Fig. 1A is a perspective view showing a front side of the seat of the baby carriage, and Fig. 1B is a perspective view showing a rear side of a backrest part of the seat of the baby carriage.

Referring to Figs. 1A and 1B, a seat of a baby carriage 10 comprises a seat part 30, a backrest part 32 continued from the seat part 30, a body frame (not shown) which supports the seat part 30 and the backrest part 32, legs 41a and 41b (reference numerals for rear legs are omitted) provided at the front and rear, and wheels 43a and 43b provided at lower ends of the legs 41a and 41b.

A seat belt 12 is provided between the seat part 30 and the backrest part 32. The seat belt 12 comprises a crotch belt 18 provided in the forward center of the seat part 30, a connector 20 mounted on the crotch belt, waist belts 16a and 16b fixed to both ends of the rear side of the seat part 30, and shoulder belts 14a and 14b continued from the waist belts 16a and 16b and extending upwards of the backrest part 32. The waist belts 16a and 16b and the shoulder belts 14a and 14b are integrated with the crotch belt 18 by the connector 20, which constitute a five-point seat belt 12.

The shoulder belts 14a and 14b pass through shoulder part through holes 35a and 35b provided at an upper part of the backrest part 32 and are led to the rear side and engage with belt adjustment lock members 39a and 39b on the rear side, respectively as shown in Fig. 1B. The belt adjustment lock members 39a and 39b are positioned in the vicinity of the shoulder part through holes 35a and 35b and sewn on the upper part of the rear side of the backrest part 32 to be fixed thereto.

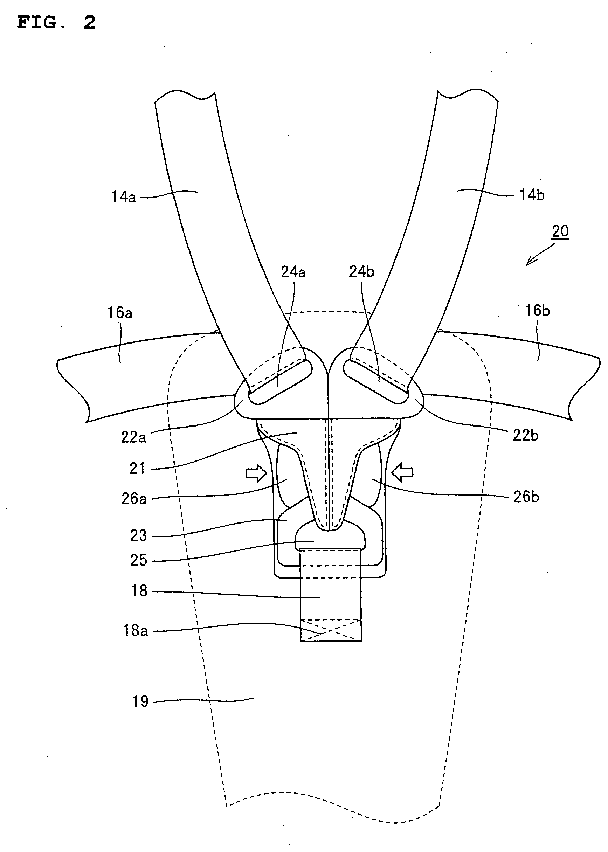

Fig. 2 is a view taken in the direction of arrow II in Fig. 1A and shows a connection state between the connector 20 provided in the center of the five-point seat belt 12 and the shoulder belts 14a and 14b, the waist belts 16a and 16b and the crotch belt 18 connected to the connector 20. Fig. 2 is different from Fig. 1 in that the crotch belt 18 is connected to the seat part 30 through a crotch pad 19.

Referring to Fig. 2, the connector 20 comprises a body 21 provided with a crotch belt locking part 23 having a crotch belt pass hole 25 at a lower part through which the crotch belt 18 passes, a lock and unlock mechanism (not shown) provided in the body 21, which detachably connects two tongue plates 22a and 22b mounted on the shoulder belts 14a and 14b through shoulder belt pass holes 24a and 24b, and unlock buttons 26a and 26b provided on both sides of the body 21, which unlock the tongue plates 22a and 22b from the body 21 by being pressed in a width direction of the seat part 30 as shown in arrows in the drawing.

As shown in the drawing, the pressing direction of the unlock buttons 26a and 26b is not the direction in which the abdomen of the baby is pressed like the conventional one-touch button, but it is the width direction of the seat part 30 as shown in Fig. 2, so that the unlock operation does not hurt the body of the baby.

A length of the crotch belt is adjustable, and an end 18a opposite to an end which engages with the crotch belt pass hole 25 is fixed to the crotch pad 19 shown by a dotted line in the drawing and fixed to the seat part 30. As shown in Fig. 2, a part other than the connector 20 is covered with the crotch pad 19, so that the crotch part of the baby is protected.

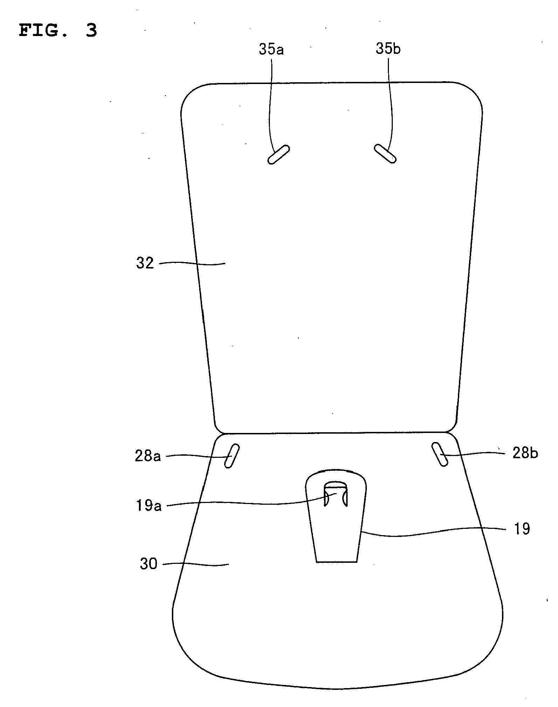

Fig. 3 is a view showing the seat part 30 and the backrest part 32. Here, the seat belt 12 is not shown. Referring to Fig. 3, waist belt through holes 28a and 28b through which the waist belts 16a and 16b pass are provided at both ends in the vicinity of the lower part of the backrest part 32 to fix one ends of the waist belts 16a and 16b to the lower face of the seat part. The end of the crotch pad 19 connected to the crotch belt 18 is connected to the center of the seat part 30. A connector cover 19a (not shown in Fig. 2) is provided at an upper part of the crotch pad 19 to cover the connector 20.

Since the waist belts 16a and 16b are fixed to both ends of the lower face of the seat part 30 in the vicinity of the lower part of the backrest part 32, the pelvis part of the baby on the baby carriage can be restrained.

The ends of the waist belts 16a and 16b may be fixed to an upper face of the seat part 30.

As described above, the shoulder part through holes 35a and 35b are provided at the upper part of the backrest part 32 through which the pair of shoulder belts 14a and 14b pass and reach the rear side. The shoulder part through holes 35a and 35b may be provided at fixed two positions as shown in the drawing or may be provided at a plurality of positions in the vertical direction so as to fit the size of the baby.

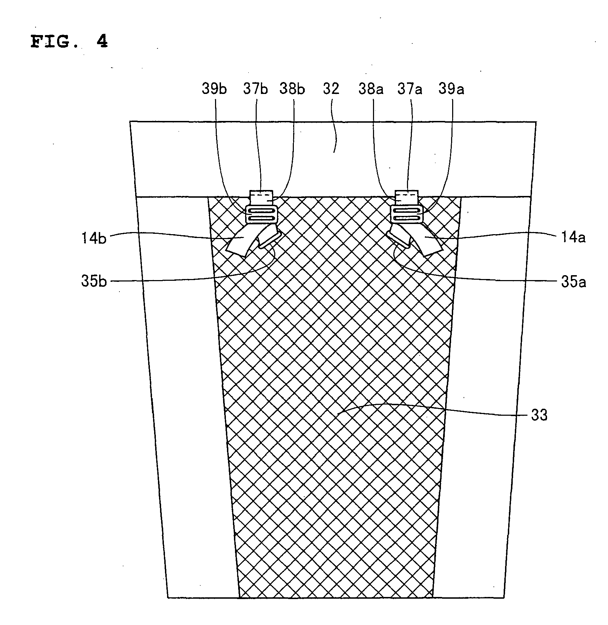

Next, the rear side of the backrest part 32 is described. Fig. 4 is an enlarged view showing the rear side of the backrest part 32 taken in the direction of arrow IV in Fig. 1B. Referring to Fig. 4, the above-described shoulder part through holes 35a and 35b are provided at the upper part of the rear side of the backrest part 32. The ends of the shoulder belts 14a and 14b passed through the above-described shoulder part through holes 35a and 35b engage with the belt adjustment lock members 39a and 39b to adjust the length of the shoulder belts 14a and 14b, respectively.

As described above, since the shoulder belts 14a and 14b on the rear side are fixed to the belt adjustment lock members 39a and 39b provided at the upper part of the backrest part, respectively, the shoulder belts 14a and 14b do not exists from an upper portion pass to a lower end of the rear side of the backrest part 32 through the center part like in the case of the five-point seat belt of the child safety seat. Thus, the center of the rear side of the backrest part 32 can be used as a bag 33 or as a ventilation part (not shown) as shown in Fig. 4. When the center is used as the ventilation part, the plurality of shoulder part through holes 35 provided in the vertical direction to fit the size of the baby may be used as the ventilation holes.

The belt adjustment lock members 39a and 39b is described hereinafter. The belt adjustment lock members 39a and 39b are plates having a plurality of parallel long grooves, and one ends thereof are fixed to sewed parts 37a and 37b on the rear side of the backrest part 32 with fix belts 38a and 38b which are strings. Thus, the belt adjustment lock members 39a and 39b are prevented from slipping out to the front side of the backrest part 32. The shoulder belts 14a and 14b engage with parallel rod-shaped members sandwiched between the above-described plurality of long grooves of the belt adjustment lock members 39a and 39b, respectively, and the length of the shoulder belts 14a and 14b can be adjusted by pulling their ends.

The string-shaped fix belts 38a and 38b may be a string having a predetermined diameter, a belt, a belt-shaped member having a predetermined width and the like.

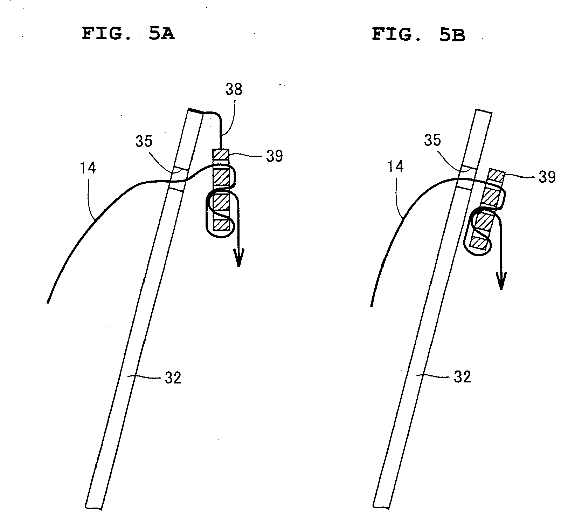

Fig. 5A is a schematic view showing a mounted state of the shoulder belts 14a and 14b on the belt adjustment lock members 39a and 39b, respectively. As shown in Fig. 5A, the lengths of the shoulder belts 14a and 14b are adjusted and prevented from slipping out by the belt adjustment lock members 39a and 39b located close to the shoulder part through holes 35a and 35b by the fix belts 38a and 38b in this embodiment.

Another embodiment of the present invention is described hereinafter. According to the above embodiment, one ends of belt adjustment lock members 39a and 39b are fixed to the rear side of the backrest part 32 through the sewn string-shaped fix belts 38. Meanwhile, according to this embodiment, belt adjustment lock members 39a and 39b are not fixed. Fig. 5B is a schematic view showing a mounting state of shoulder belts 14a and 14b on the belt adjustment lock members 39a and 39b in this case. As shown in Fig. 5B, the belt adjustment lock members 39a and 39b are connected to the pair of shoulder belts 14a and 14b only, and lengths of the shoulder belts 14a and 14b are adjusted and the shoulder belts 14a and 14b are prevented from slipping out by the belt adjustment lock members in this embodiment.

More specifically, according to this embodiment, size of shoulder part through holes 35a and 35b are set so as to be smaller than the belt adjustment lock members 39a and 39b as shown in Fig. 5B. Thus, since the belt adjustment lock members 39a and 39b cannot pass through the shoulder part through holes 35a and 35b, the belt adjustment lock members 39a and 39b are prevented from slipping out to the front side of the backrest part 32.

The case where the seat according to one embodiment of the present invention is applied to the baby carriage has been described in the above embodiments. The present invention is not limited to this, and it can be applied to a seat in the baby safety chair, a wheelchair and the like similarly.

Furthermore, although the case where the shoulder belt is provided continuing from the waist belt has been described in the above embodiments, the present invention is not limited to this, and a waist belt and a shoulder belt may be separately provided and they may be connected to a connector mounted on a crotch belt.

Alternatively, its constitution may be such that only a shoulder belt is connected to a connector mounted on a crotch belt without a waist belt.

Further, although the case where the pair of shoulder belts is fixed to the rear side of the backrest part by the belt adjustment lock members has been described in the above embodiments, the present invention is not limited to this and a pair of shoulder belts may be integrated at a rear side of a backrest part to be fixed thereto without providing a separate belt adjustment lock members.

Although the case where the crotch belt is fixed to the seat part through the crotch pad has been described in the above embodiment, the present invention is not limited to this, and the crotch belt may be directly fixed to the seat part without providing a crotch pad.

Although embodiments of the present invention has been described with reference to the drawings, the present invention is not limited to the illustrated embodiments. Thus, various variations can be added to the illustrated embodiments within the same or equivalent scope of the present invention.

Since the seat according to the present invention has the seat belt which can surely hold the baby and the like with the simple structure, it can be advantageously used as the seat having the seat belt.

## Claims

1. A seat having a seat part (30), and a backrest part (32) continued from said seat part (30), comprising:
a crotch belt (18) having one end fixed to the center of said seat part (30);
a pair of shoulder belts (14a,14b) connected to the other end of said crotch belt (18) and having rear ends which pass through shoulder part through holes (35a,35b) provided at an upper part of said backrest part and which are led to a rear side of said backrest part (32); and
a belt adjustment lock member (39a,39b) which is positioned on the rear side of said backrest part (32) so as to be close to said shoulder part through holes (35a,35b), receive the other ends of said pair of shoulder belts (14a,14b) with their lengths adjustable, and prevent said pair of shoulder belts (14a,14b) from slipping out forward from said shoulder part through holes (35a,35b).

2. The seat according to claim 1, wherein said belt adjustment lock (39a,39b) is provided at the upper part of the rear side of said backrest part (32).

3. The seat according to claim 2, wherein said belt adjustment lock member (39a,39b) is mounted on the upper part of the rear side of the backrest part (32) by a string.

4. The seat according to claim 2, wherein said belt adjustment lock member (39a,39b) is connected only to said pair of shoulder belts.
